# EUROPÄISCHE PATENTANMELDUNG

(11) **EP 0 741 284 A2**
(43) Veröffentlichungstag der Anmeldung: **06.11.1996**
(21) Anmeldenummer: 96106033.2
(22) Anmeldetag: 17.04.1996
(51) Int. Cl.: G01K 1/14, G01K 13/02

(54) **Frischbeton-Temperaturmessvorrichtung**

(30) Priorität: 02.05.1995 DE 29507270 U
(71) Anmelder: Liebherr-Mischtechnik GmbH, 88423 Bad Schussenried (DE)
(72) Erfinder: Reiber, Johann, 86871 Rammingen (DE)
(74) Vertreter: Laufhütte, Dieter, Dr.-Ing.

(57) **Zusammenfassung**

Die Erfindung betrifft eine Frischbeton-Temperaturmeßvorrichtung zur Erfassung und Überwachung der Temperatur von Frischbeton in einer Mischanlage, in deren Trog Mischgut eingefüllt ist. Erfindungsgemäß ist die Temperaturmeßvorrichtung (1) in Temperaturübertragungskontakt mit wenigstens einer Trogverschleißplatte (3) angeordnet.

## Beschreibung

Die Erfindung betrifft eine Frischbeton-Temperaturmeßvorrichtung zur Erfassung und Überwachung der Temperatur von Frischbeton in einer Mischanlage, in deren Trog Mischgut eingefüllt ist.

Die Erfassung und Überwachung der Temperatur von Frischbeton in einer Mischanlage ist an sich bekannt, da bei der Herstellung von Frischbeton für das Betonieren bei kühler Witterung eine Mindestfrischbetontemperatur je nach vorherrschender Außentemperatur z.B. gemäß DIN 1045 eingehalten werden muß. Zudem sollten Frischbetontemperaturen von mehr als 30° C vermieden werden, um ein verfrühtes Ansteifen des Betons auf der Baustelle zu verhindern.

Für eine derartige Erfassung und Überwachung der Frischbeton-Temperatur in einer Mischanlage sind bisher Infrarot-Temperaturmeßvorrichtungen eingesetzt worden, die die Temperatur des Frischbetons berührungsfrei feststellen können. Eine derartige Infrarot-Temperaturmeßvorrichtung ist jedoch relativ bauaufwendig und damit teurer, insbesondere wenn die für die Qualitätsüberwachung erforderliche Meßgenauigkeit im Gradbereich oder darunter eingehalten werden soll. Aufgrund des sehr hohen Preises werden derartige Infrarot-Temperaturmeßvorrichtungen nur begrenzt eingesetzt, zumal hierzu gesonderte Halterungen für die "Überwachungskamera" erforderlich sind, sowie diese Temperaturmeßvorrichtung eine sorgfältige Wartung benötigt.

Demzufolge liegt der Erfindung die Aufgabe zugrunde, eine Frischbeton-Temperaturmeßvorrichtung zu schaffen, die bei hoher Meßgenauigkeit erheblich preiswerter ist und wartungs- und montagefreundlich ist.

Diese Aufgabe wird gelöst durch eine Frischbeton-Temperaturmeßvorrichtung gemäß den Merkmalen des Anspruchs 1.

Durch die Anordnung der Temperaturmeßvorrichtung in Temperaturübertragungskontakt mit wenigstens einer Trogverschleißplatte in dem Mischanlagentrog wird eine hochgenaue Meßwerterfassung in unmittelbarer Nähe des Mischgutes bzw. des Frischbetons erreicht, so daß die tatsächlich im Frischbeton herrschenden Temperaturen exakt erfaßt werden können. Fehlmessungen aufgrund von Außentemperatureinflüssen werden dadurch ausgeschlossen. Zudem ist durch die Anordnung im Bereich einer Trogverschleißplatte von außen her, bevorzugt mittels einer einfachen Befestigungsschraube die Montage sehr einfach. Durch den bevorzugt vorgesehenen, handelsüblichen Temperatur-Meßwiderstand, insbesondere in der Ausführung als PTC-Thermistor ergibt sich eine preiswerte Bauweise der Temperaturmeßvorrichtung und zudem eine Wartungsfreiheit der Temperaturvorrichtung, da derartige Temperatur-Meßwiderstände praktisch keinem Verschleiß unterworfen sind.

Durch die direkte Anordnung der Temperaturmeßvorrichtung an einer Trogverschleißplatte genügt im allgemeinen ein einziger Temperatur-Meßwiderstand zur Erfassung der Frischbetontemperatur in der Mischanlage, da sich das Mischgut in ständiger Umwälzung befindet. Zur Erhöhung der Meßgenauigkeit kann jedoch auch beispielsweise an der gegenüberliegenden Stirnwand des Mischguttroges ein zweiter Meßwiderstand vorgesehen sein, so daß durch Mittelung der beiden Meßwerte eine weitere Genauigkeitssteigerung erreicht wird. Zudem können die beiden Meßwiderstände sich in Art einer redundanten Schaltung gegenseitig überwachen, so daß ein Ausfall eines Meßwiderstandes erkennbar ist.

Zudem können bevorzugt die Temperaturmeßvorrichtung(-en) mit einer Dosiersteuerung verbunden sein, so daß bei zu niedriger Temperatur automatisch Warmwasser zugegeben wird. Eine ähnliche Dosierung kann für Betonzusatzstoffe (Verzögerer) vorgesehen sein, so daß eine optimale Betonqualität eingestellt werden kann. Insbesondere wird jedoch durch die Anzeige und Kontrolle der Mischguttemperatur in der Mischanlage ein unnötig hoher Energieeinsatz vermieden, wie dies zum Teil in der Praxis durch Warmwasserzugabe mit übermäßig hoher Wassertemperatur noch vorliegt.

Weitere vorteilhafte Ausgestaltungen sind Gegenstand der Unteransprüche.

Nachfolgend wird ein Ausführungsbeispiel der Frischbeton-Temperaturmeßvorrichtung anhand der Zeichnungen näher erläutert und beschrieben. Hierbei zeigen:
- Fig. 1: eine schematische Perspektivdarstellung einer Frischbeton-Mischanlage mit angedeuteter Plazierung der Temperaturmeßvorrichtung; und
- Fig. 2: eine Schnittdarstellung durch eine Trogwand der Mischanlage entlang der Schnittlinie A-A in Fig. 1.

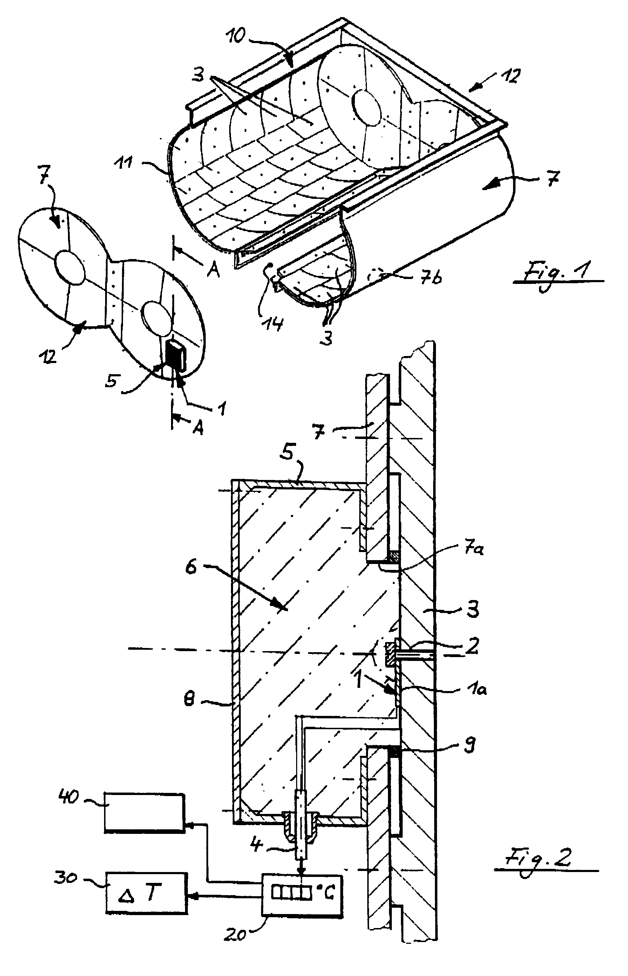

In Fig. 1 ist eine Mischanlage 10 in der Ausführungsform als Doppelwellen-Zwangsmischer perspektivisch dargestellt. Der Mischanlagentrog wird hierbei von einer Trogwand 7 umschlossen, die aus einem doppel-zylinderischen Wandungsteil 11 und zwei Stirnwänden 12 besteht. Die Innenseite der Trogwand 7 ist sowohl an den Stirnseiten 12 als auch im zylinderischen Teil 11 mit einer Vielzahl von Trogverschleißplatten 3 ausgekleidet. Derartige Trogverschleißplatten 3 sind im allgemeinen aus Grauguß oder Temperguß hergestellt und mittels nicht näher dargestellter Schrauben mit der Trogwand 7 verbunden. Das Mischgut für den herzustellenden Frischbeton wird dabei durch die obere Öffnung der Mischanlage 10 zugeführt, mittels nicht näher dargestellter Mischerschaufeln umgewälzt, um dann durch eine untenliegende Auslaßöffnung 14 die Mischanlage 10 zu verlassen.

Zur Erfassung und Überwachung der Temperatur des Frischbetons bzw. des Mischgutes in der Mischanlage 10 ist hier im Bereich der entfernt dargestellten Stirnwand 12 eine Temperaturmeßvorrichtung 1 vorgesehen. Hierbei ist die Temperaturmeßvorrichtung 1 im Bereich einer Öffnung 7a in der Trogwand (hier der Stirnwand 12) befestigt, um mit einer innenliegenden Trogverschleißplatte 4 (vgl. Fig. 2) in Temperaturübertragungskontakt zu stehen. Der hier gezeigte Plazierungsort an einer der Stirnwände 12 ist nur beispielhaft; so kann die Temperaturmeßvorrichtung 1 ebenfalls an einem tiefliegenden Bereich des zylinderischen Trogteils 11 angeordnet sein, wie dies mit dem strichlierten Kreis 7b angedeutet ist oder ebenfalls an der gegenüberliegenden (hier hinteren Stirnwand 12) angeordnet sein. Da der Trog der Mischanlage im allgemeinen etwa zur Hälfte gefüllt ist, ist dabei die Plazierung der Temperaturmeßvorrichtung 1 im unteren Bereich zweckmäßig.

In Fig. 2 ist eine Schnittdarstellung durch die Trogwand 7, hier der Stirnwand 12 gemäß der Schnittlinie A-A in Fig. 1 dargestellt. Die Trogwand 7 weist hierbei eine Öffnung 7a auf, so daß von außen her der Zugang zu der innenliegenden Trogverschleißplatte 3 möglich ist. An dieser Trogverschleißplatte 3 ist bevorzugt mittels einer Befestigungsschraube 2 ein Temperatur-Meßwiderstand 1a befestigt, wobei die Anlagefläche des Temperatur-Meßwiderstandes 1a über eine Wärmeleitpaste an der metallisch blanken Fläche der Trogverschleißplatte 3 anliegt. Es sei darauf hingewiesen, daß die Befestigung der Temperaturmeßvorrichtung 1, insbesondere in Form des kleinbauenden Temperatur-Meßwiderstandes 1a anstatt der hier gezeigten Befestigungsschraube 2 auch durch andere Befestigungselemente, wie Klammern erfolgen kann oder auch durch Ankleben des Temperatur-Meßwiderstandes 1a an der Trogverschleißplatte 3.

Die Meßwertübertragung von der Temperaturmeßvorrichtung 1, insbesondere des Temperatur-Meßwiderstandes 1a erfolgt mittels eines Kabels 4 zu einem elektronischen Anzeige- und Auswertegerät 20. Das Kabel 4 ist hierbei durch ein spritzwassergeschütztes Gehäuse 5 hindurchgeführt, das an der Trogwand 7 befestigt ist. Im Inneren des Gehäuses 5 ist eine Isolierauskleidung 6 vorgesehen, die bevorzugt den gesamten Innenraum des Gehäuses 5 ausfüllt, um hier Temperatureinflüsse der Außentemperatur von der Temperaturvorrichtung 1 fernzuhalten. Diese Isolierverkleidung 6 ist bevorzugt als Formschaumteil ausgebildet, wobei ein Kabelkanal für das Kabel 4 frei bleibt sowie eine kleine Aushöhlung im Bereich des Temperatur-Meßwiderstandes 1a. Die hier in Strichpunktlinien angedeutete Isolierverkleidung 6 kann jedoch auch direkt an der Temperaturmeßvorrichtung 1, insbesondere an dem flachen Temperatur-Meßwiderstand 1a anliegen, so daß die Isolierauskleidung 6 auch zur Fixierung des Meßwiderstandes 1a gegenüber der Trogverschleißplatte 3 dienen kann.

Die in dem Anzeige- und Auswertegerät 20 erfaßten Temperaturmeßwerte können in einem Dokumentationsspeicher 40 (beispielsweise einer Computer-Festplatte) abgespeichert werden, so daß hierdurch eine vollständige Qualitätsüberwachung für die einzelnen Chargen über einen langen Zeitraum möglich ist. Ebenso können die gewonnenen Meßwerte zur Steuerung eines Dosiergerätes 30 verwendet werden, insbesondere zur Dosierung und Zugabe von Warmwasser unterschiedlicher Temperatur in die Mischanlage 10. Ebenfalls können hierdurch chemische Zusatzmittel wie Verzögerer für den Frischbeton automatisch in Abhängigkeit von der erfaßten Frischbeton-Temperatur zudosiert werden, obwohl dies im allgemeinen noch manuell gemäß der an dem Anzeige- und Auswertegerät 20 dargestellten Temperatur erfolgt.

Das spritzwassergeschützte Gehäuse 5 kann weiterhin einen Deckel 8 aufweisen, durch den die Isolierauskleidung 6 über der Temperaturmeßvorrichtung 1 in das Gehäuse 5 eingesetzt werden kann. Weiterhin ist im Bereich der Öffnung 7a zwischen der Trogwand 7 und der Trogverschleißplatte 3 ein Dichtungsring 9 vorgesehen, so daß häufig zwischen der Trogwand 7 und der Trogverschleißplatte 3 befindliche Flüssigkeit nicht zu der Temperaturmeßvorrichtung 1 vordringen kann.

Es sei darauf hingewiesen, daß die Meßwerterfassung durch die Wärmeleitung von dem in der Mischanlage 10 befindlichen Frischbeton über die metallischen Trogverschleißplatten 3 auch bei längerem Gebrauch aufrechterhalten bleibt, da die Temperaturleitung auch bei abnehmender Dicke der Trogverschleißplatte 3 im wesentlichen konstant ist. Damit wird eine hohe Langzeitgenauigkeit erreicht.

Schließlich sei darauf hingewiesen, daß als Temperaturvorrichtung auch andere dem Fachmann geläufige Temperaturmeßelemente Verwendung finden können, obwohl bevorzugt ein PTC-Thermistor (sogenannter Kaltleiter) Verwendung findet, dessen elektrischer Widerstand sich stark mit der Temperatur ändert, nämlich den elektrischen Strom im kalten Zustand besser leitet als im heißen. So können auch NTC-Thermistoren (Heißleiter) oder auch spannungsabhängige Widerstände als Temperaturmeßelemente dienen.

## Patentansprüche

1. Frischbeton-Temperaturmeßvorrichtung zur Erfassung und Überwachung der Temperatur von Frischbeton in einer Mischanlage, in deren Trog Mischgut eingefüllt ist,
**dadurch gekennzeichnet**,
daß die Temperaturmeßvorrichtung (1) in Temperaturübertragungskontakt mit wenigstens einer Trogverschleißplatte (3) angeordnet ist.

2. Temperaturmeßvorrichtung nach Anspruch 1, dadurch gekennzeichnet, daß die Temperaturmeßvorrichtung (1) an der Trogverschleißplatte (3) befestigt ist.

3. Temperaturmeßvorrichtung nach Anspruch 2, dadurch gekennzeichnet, daß die Temperaturmeßvorrichtung (1) an der Trogverschleißplatte (3) mittels einer Schraube (2) befestigt ist.

4. Temperaturmeßvorrichtung nach Anspruch 3, dadurch gekennzeichnet, daß sich die Schraube (2) zur Befestigung der Temperaturmeßvorrichtung (1) durch die Trogverschleißplatte (3) hindurch erstreckt und mit deren Innenfläche bündig abschließt.

5. Temperaturmeßvorrichtung nach einem der Ansprüche 1 bis 4, dadurch gekennzeichnet, daß die Temperaturmeßvorrichtung (1) aus einem Temperatur-Meßwiderstand (1a) gebildet ist.

6. Temperaturmeßvorrichtung nach Anspruch 5, dadurch gekennzeichnet, daß der Temperatur-Meßwiderstand (1a) als PTC-Thermistor ausgebildet ist.

7. Temperaturmeßvorrichtung nach einem der Ansprüche 1 bis 6, dadurch gekennzeichnet, daß die Temperaturmeßvorrichtung (1) in einem spritzwassergeschützten Gehäuse (5) an einer Öffnung (7a) einer Trogwand (7) angeordnet ist.

8. Temperaturmeßvorrichtung nach Anspruch 7, dadurch gekennzeichnet, daß das Gehäuse (5) eine Isolierauskleidung (6) aufweist.

9. Temperaturmeßvorrichtung nach Anspruch 8, dadurch gekennzeichnet, daß die Isolierauskleidung (6) den Innenraum des Gehäuses (5) im Bereich der Öffnung (7a) vollständig ausfüllt.

10. Temperaturmeßvorrichtung nach einem der Ansprüche 7 bis 9, dadurch gekennzeichnet, daß um die Öffnung (7a) herum zwischen der Trogwand (7) und der Trogverschleißplatte (3) eine Dichtung (9) angeordnet ist.

11. Temperaturmeßvorrichtung nach einem der Ansprüche 1 bis 10, dadurch gekennzeichnet, daß die Temperaturmeßvorrichtung (1) an einer Stirnwand (12) des Troges (7) der Mischanlage (10) angeordnet ist.

12. Temperaturmeßvorrichtung nach einem der Ansprüche 1 bis 11, dadurch gekennzeichnet, daß mehrere Temperaturmeßvorrichtung(-en) (1) an der Trogverschleißplatte (3) befestigt ist/sind.

13. Temperaturmeßvorrichtung nach Anspruch 12, dadurch gekennzeichnet, daß die Temperaturmeßvorrichtung(-en) (1) in einem gemeinsamen Auswerte- und Anzeigegerät (20) zusammengeschaltet ist/sind.

14. Temperaturmeßvorrichtung nach einem der Ansprüche 1 bis 13, dadurch gekennzeichnet, daß der Meßwert der Temperaturmeßvorrichtung(-en) (1) in einem Dokumentationsspeicher (40) abgespeichert ist/sind.

15. Temperaturmeßvorrichtung nach einem der Ansprüche 1 bis 14, dadurch gekennzeichnet, daß die Temperaturmeßvorrichtung(-en) (1) mit einer Dosiervorrichtung (30) für Warmwasser gekoppelt ist/sind.

16. Temperaturmeßvorrichtung nach einem der Ansprüche 5 bis 15, dadurch gekennzeichnet, daß die Anlagefläche des Temperatur-Meßwiderstandes (1) an der Trogverschleißplatte (3) mit einer Wärmeleitpaste versehen ist.
